# EUROPÄISCHE PATENTSCHRIFT

(11) **EP 3 612 294 B1**
(45) Veröffentlichungstag und Bekanntmachung des Hinweises auf die Patenterteilung: **26.05.2021**
(21) Anmeldenummer: 18725756.3
(22) Anmeldetag: 18.04.2018
(51) Int. Cl.: B01D 65/10, B01D 65/08

(54) **MEMBRANMODUL UND VERFAHREN ZUR DETEKTION VON ABLAGERUNGEN IN EINEM MEMBRANMODUL**
MEMBRANE MODULE AND METHOD FOR DETECTING DEPOSITS IN A MEMBRANE MODULE
MODULE À MEMBRANE ET PROCÉDÉ DE DÉTECTION DE DÉPÔTS DANS UN MODULE À MEMBRANE

(30) Priorität: 21.04.2017 DE 102017108535
(43) Veröffentlichungstag der Anmeldung: 26.02.2020
(73) Patentinhaber: Grünbeck Wasseraufbereitung GmbH, 89420 Höchstäd a.d. Donau (DE); Technische Universität München, 80333 München (DE)
(72) Erfinder: HAGER, Simon, 86157 Augsburg (DE); GLAS, Karl, 85354 Freising (DE); MEINARDUS, Martin, 89231 Neu-Ulm (DE); ALBERT, Matthias, 86179 Augsburg (DE)
(74) Vertreter: Charrier Rapp & Liebau
(86) Internationale Anmeldenummer: PCT/EP2018/059847
(87) Internationale Veröffentlichungsnummer: WO 2018/192945

(56) Entgegenhaltungen:
- WO-A1-2017/002081
- GB-A- 1 290 492
- US-A1- 2008 084 565

## Beschreibung

Die Erfindung betrifft ein Membranmodul mit einer Vorrichtung zur Detektion von Ablagerungen und ein Verfahren zur Detektion von Ablagerungen in einem ein Permeat produzierendes Membranmodul.

In der Membrantrenntechnik werden Membranmodule zur Separation eines Permeats und eines Retentats aus einem Feed-Strom eines durch das Membranmodul geleiteten Fluids verwendet. Das Retentat wird dabei von wenigstens einer in dem Membranmodul angeordneten permeablen oder semipermeablen Membran zurückgehalten, während das Permeat die Membran durchdringt. Dadurch werden niedermolekulare und hochmolekulare Stoffe des Feed-Stroms voneinander getrennt, wobei das Retentat die hochmolekularen Bestandteile des Feed-Stroms in angereichter Form enthält und deshalb auch als Konzentrat bezeichnet wird.

Membranmodule enthalten in der Regel mehrere Lagen einer permeablen oder semipermeablen Membranschicht, wobei die Lagen beispielsweise als Flachmembranlagen ausgebildet sein können, die beispielsweise in einem Plattenmodul übereinander geschichtet oder in einem Wickelmodul spiralförmig um ein zentrales Rohr aufgewickelt sein können. Zwischen aufeinanderfolgenden Membranlagen ist dabei ein Zwischenlage angeordnet, die als Abstandshalter (Spacer) dient und die Stoffführung des Permeats und des Retentats (bzw. Konzentrats) zwischen den Membranlagen ermöglicht. Weitere Ausführungsformen für Membranmodule sind beispielsweise Membrantaschenmodule, in denen randseitig verschweißte Membrantaschen um ein mit Bohrungen versehenes Rohr gewickelt sind, oder Hohlfasermodule, in denen Hohlmembrane bündelweise angeordnet und an einem Ende in einer Fixierung gehalten werden, wobei die Hohlfasern an der Permeatseite offen und an der Retentatseite verschlossen sind.

Aus der DE 42 33 952 C1 und der DE 101 30 716 A1 sind beispielsweise Wickelmodule bekannt, die für die Umkehrosmose bzw. zur Cross-Flow-Filtration, insbesondere zur Mikrofiltration, eingesetzt werden können. Ein weiteres Wickelmodul ist in der US 2003/0205520 A1 gezeigt. Ein Hohlfasermodul ist beispielsweise aus der DE 10 2016 004 573 A1 bekannt.

Membranmodule werden häufig in Membrananlagen modular und insbesondere in Reihen-und Parallelschaltungen angeordnet, wodurch die Membrananlage an den benötigten Umfang des Trennprozesses (wie bspw. an den benötigten Durchsatz) und die Stoffeigenschaften des Feed-Stroms sowie des zu erzeugenden Permeats und Retentats, insbesondere die Partikelgröße der in einer Lösung gelösten und abzutrennenden Partikel, angepasst werden kann.

Membranmodule werden umfangreich in Wasseraufbereitungsverfahren und Filtrationsverfahren eingesetzt. Je nach Größe der beispielsweise aus einer wässrigen Lösung abzutrennenden Stoffe wird dabei zwischen Mikrofiltration, Ultrafiltration, Nanofiltration und der Umkehrosmose unterschieden, wobei der Trennprozess erfolgt, indem bspw. eine Partikel enthaltende Lösung unter Druck durch die Membranschichten der in einer Membrantrennanlage modular angeordneten Membranmodule geleitet wird. Da beispielsweise für die Umkehrosmose und die Nanofiltration hohe Drücke im Bereich von 3 bis 20 bar (Nanofiltration) bzw. von 10 bis 100 bar (Umkehrosmose) benötigt werden, sind die Membranschichten eines Membranmoduls in einem druckstabilen Gehäuse, beispielsweise einem zylindrischen Druckrohr angeordnet. Das Gehäuse weist zur Zuführung des Feed-Stroms einen Eingang und zur Abführung des Permeats und des Konzentrats einen Permeatausgang und einen Konzentratausgang auf. Bei einem Wickelmodul wird der Feed-Strom beispielsweise an einer Stirnseite des Wickelmoduls eingeleitet und das Permeat wird in einem zentralen Permeatrohr, welches über Öffnungen verfügt, gesammelt und durch das Permeatrohr aus dem Wickelmodul abgeleitet. Das Konzentrat strömt am anderen stirnseitigen Ende des Wickelmoduls aus und kann über einen Konzentratausgang abgeführt werden.

Insbesondere bei der Verwendung von Membranmodulen in Wasseraufbereitungs- und Filtrationsverfahren entstehen auf den Membranoberflächen Ablagerungen, die eine Deckschicht ausbilden, in der sich Mineralien (beispielsweise Kalk), kolloidale Wasserinhaltsstoffe und Mikroorganismen in Form eines Biofilms anlagern. Diese Deckschicht vermindert die Trennleistung der Membranschicht, weshalb regelmäßig und insbesondere periodisch eine Reinigung bzw. Spülung der Membranmodule oder ein Austausch der Membranschichten erforderlich ist. Zur Reinigung der Membranschichten können beispielsweise tensidhaltige Reinigungslösungen eingesetzt werden. Um die Trennfunktion der Membranschichten dauerhaft aufrecht zu erhalten, ist es notwendig, rechtzeitig eine Reinigung bzw. Spülung der Membranschichten vorzunehmen, bevor die Membranschichten verblocken. Um eine rechtzeitige Reinigung und Spülung zu gewährleisten, wird in der Regel mit einem gewissen zeitlichen Sicherheitsabstand vor einer drohenden Verblockung der Membranschichten ein Reinigungs- bzw. Spülvorgang durchgeführt. Dadurch bedingt werden die Membranmodule tendenziell zu häufig gereinigt, weshalb einerseits ein hoher Verbrauch an Reinigungs- und Spülllösung entsteht und andererseits längere Stillstandszeiten während der Durchführung des Reinigungsprozesses in Kauf genommen werden müssen, in denen das Membranmodul nicht zur Durchführung des Trennprozesses zur Verfügung steht. Weiterhin tritt trotz regelmäßiger Reinigung der Membranschichten mit tensidhaltigen Reinigungslösungen ein Bewuchs der Membranoberflächen durch Mikroorganismen (Biofouling) auf. Biofouling führt ebenfalls zu einer Reduzierung der Trennleistung der Membranmodule.

Zur Erfassung von Ablagerungen wird in der US 2008/0084565 A1 ein interferometrisches Detektionssystem beschrieben, das auch in Umkehrosmose-Membranmodulen eingesetzt werden kann.

Die GB 1290 492 offenbart ein optisches System zur Erfassung der Dicke eines Filterkuchens, der sich auf mehreren, übereinander im Abstand zueinander angeordneten Filterelementen ablagert, wobei das optische System einen Träger und einen darauf angeordneten Strahlungssender und einen Strahlungsempfänger umfasst, wobei der Träger oberhalb eines der mehreren Filterelemente platziert wird und das vom Strahlungssender emittierte Licht auch durch Lichtleitelemente geführt werden kann.

Die WO 2017/002081 A1 offenbart ein System zur Foulingdetektion, insbesondere in Behältern, wobei mittels eines Lichtleiters Licht eines optischen Arms eines Kohärenz-Spektrometers in den auf Fouling zu untersuchenden Bereich (ROI) geführt und das von dort reflektierte Lichtsignal mit dem Lichtsignal eines Referenzarms des Spektrometers interferiert wird.

Hiervon ausgehend liegt der Erfindung die Aufgabe zu Grunde, ein Membranmodul und ein Verfahren zur Detektion von Ablagerungen in einem ein Permeat produzierendes Membranmodul aufzuzeigen, mit denen jederzeit während des Betriebs des Membranmoduls Ablagerungen, beispielsweise in Form von mineralischen Ablagerungen (Scaling), Ablagerungen organischer Moleküle oder Bewuchs durch Mikroorganismen (Biofouling), auf den Oberflächen der im Membranmodul enthaltenen Membranschichten erfasst werden können. Eine weitere Aufgabe der Erfindung besteht darin, ein Membranmodul, das über eine Mehrzahl von neben- oder übereinanderliegenden Lagen aus einer permeablen oder semipermeablen Membranschicht umfasst, so weiter zu bilden, dass während eines Betriebs des Membranmoduls in einem Membrantrennverfahren, in dem aus einem dem Membranmodul zugeführten Feed-Strom eines Fluids ein Permeat erzeugt wird, Ablagerungen auf den Oberflächen der Membranschicht erfasst werden können. Durch das Verfahren soll die Menge von Reinigungs- und Spüllösungen, die zur regelmäßigen Reinigung und Spülung der bekannten Membranmodule eingesetzt werden, minimiert werden und es soll die für die Reinigung der Membranmodule benötigte Zeit, in der die Membranmodule nicht für einen Membrantrennprozess zur Verfügung stehen, reduziert werden. Der Erfolg von Reinigungsprozessen soll dabei überprüft werden können.

Diese Aufgaben werden mit dem Membranmodul des Anspruchs 1 sowie dem Verfahren des Anspruchs 10 gelöst. Bevorzugte Ausführungsformen des Membranmoduls und des Verfahrens sind den abhängigen Ansprüchen zu entnehmen.

Gemäß der Erfindung ist in einem Membranmodul, welches über mindestens eine permeable oder semipermeable Membranschicht verfügt, mindestens eine polymeroptische Faser in das Membranmodul eingegliedert, wobei die polymeroptische Faser in Kontakt mit mindestens einer Membranschicht steht.

Die polymeroptische Faser enthält dabei zweckmäßig einen Faserkern aus einem Polymermaterial (beispielsweise PMMA) und einen den Faserkern umgebenden Mantel, wobei der Brechungsindex des Mantelmaterials kleiner ist als der Brechungsindex des Polymermaterials. Bevorzugt weist die polymeroptische Faser in einem Abschnitt, der innerhalb des Membranmoduls angeordnet ist, eine Aussparung im Mantel auf, so dass der Faserkern im Bereich dieser Aussparung frei liegt und mit der Umgebung, in der die polymeroptische Faser sich befindet, in Kontakt kommt. Der Mantel kann dabei auch mehrschichtig ausgebildet sein und bspw. eine innere optisch wirksame Mantelschicht, die benachbart zum Faserkern liegt und einen im Vergleich zum Faserkern kleineren Brechungsindex aufweist, sowie einen äußeren Schutzmantel umfassen. Dabei reicht es u.U. bereits aus, wenn nur der äußere Schutzmantel bereichsweise entfernt wird. Es ist hierbei jedoch auch möglich und zur Erhöhung der Empfindlichkeit sinnvoll, sowohl die optisch wirksame Mantelschicht als auch den äußeren Schutzmantel bereichsweise zu entfernen, so dass im Bereich der Ausnehmungen, in denen der Mantel der Faser (vollständig) entfernt worden ist, der Faserkern frei liegt.

Die erfindungsgemäß in das Membranmodul eingegliederte polymeroptische Faser kommt in dem Membranmodul mit dem Fluid in Kontakt, welches dem Membranmodul als Feed-Strom zugeführt wird. Soweit sich auf den Oberflächen der Membranschichten des Membranmoduls bedingt durch die Durchleitung des Fluids Ablagerungen in Form von Mineralien, organischen Molekülen oder Mikroorganismen bilden, lagern sich die entsprechenden Stoffe dieser Ablagerungen auch auf der Oberfläche der polymeroptischen Faser und insbesondere im Bereich der Aussparung in deren Mantel direkt auf dem Faserkern ab. Beim Anwachsen der Anlagerungen auf der Oberfläche der polymeroptischen Faser und insbesondere im Bereich der Aussparung des Mantels auf dem Faserkern verändern sich die optischen Kennwerte der polymeroptischen Faser. Insbesondere reduziert sich die Transmissivität der Faser, da die Ablagerungen in der Regel einen anderen Brechungsindex aufweisen als der Mantel bzw. der Kern der polymeroptischen Faser. Wenn die Ablagerungen bspw. einen höheren Brechungsindex aufweisen als der Kern der polymeroptischen Faser (was bspw. bei Scaling der Fall ist), wird die Transmissivität reduziert, weil das in die Faser eingekoppelte Licht aus dem Faserkern austritt. Wenn die Ablagerungen einen niedrigeren Brechungsindex aufweisen als der Kern der polymeroptischen Faser (was bspw. bei Biofouling der Fall ist), ändern sich ebenfalls die optischen Kennwerte der Faser, aufgrund von Wechselwirkungen zwischen den Ablagerungen und der durch die Totalreflexion des Lichts im Faserkern hervorgerufenen evaneszenten Wellen. Die durch die Ablagerungen bedingten Änderungen der optischen Kennwerte der polymeroptischen Faser können beispielsweise erfasst werden, indem ein Ende der polymeroptischen Faser mit einem Sender für eine elektromagnetische Strahlung (beispielsweise einer Lichtquelle, insbesondere einer Laserdiode) und das andere Ende der Faser mit einem strahlungsempfindlichen Empfänger (beispielsweise einer lichtempfindlichen Diode) gekoppelt wird. Mittels Verwendung des Senders und des Empfängers können die sich aufgrund der zunehmenden Ablagerungen verändernden optischen Kennwerte der polymeroptischen Faser, insbesondere ihre Transmissivität, während des Betriebs des Membranmoduls erfasst werden, ohne dass dabei die Membrantrennfunktion beeinflusst wird. Über die erfasste Änderung der optischen Kennwerte können Ablagerungen, die sich auf der Oberfläche der polymeroptischen Faser gebildet haben, quantitativ erfasst werden. Je größer die erfasste Änderung der optischen Kennwerte der Faser gegenüber einem Ausgangszustand ist, desto größer ist die Menge der Ablagerungen, auf der polymeroptischen Faser und damit auch auf der benachbart dazu angeordneten Membranschicht. Über die von der polymeroptischen Faser erzeugten Messwerte kann daher auf den Zustand der Membranschichten in dem Membranmodul geschlossen werden und es kann ermittelt werden, wann eine Reinigung notwendig ist, um ein Verblocken der Membranschichten zu verhindern. Da die polymeroptische Faser in dem Membranmodul in Kontakt mit mindest einer Membranschicht steht, ist davon auszugehen, dass sich in dem selben Umfang, wie sich Ablagerungen auf der Oberfläche der polymeroptischen Faser gebildet haben, auch entsprechende Ablagerungen auf den Oberflächen der Membranschicht niedergeschlagen haben. Deshalb kann über die Erfassung der Änderung der optischen Kennwerte der polymeroptischen Faser sowohl auf die Existenz als auch auf die Quantität von Ablagerungen auf den Oberflächen der Membranschichten des Membranmoduls geschlossen werden.

Bei einer Membrananlage, die mehrere Membranmodule enthält, muss die Messung der Ablagerungen nicht zwingend in einem Modul erfolgen, welches für den eigentlichen Herstellungsprozess des Permeats (Membrantrennprozess) verwendet wird. Ein parallel geschaltetes Messmodul, in welchem die gleichen Membrantrennprozesse ablaufen, dessen Output (Konzentrat und Permeat) jedoch nicht für den Herstellungsprozess eingesetzt werden, ermöglicht dabei bspw. einen Rückschluss auf das Vorhandensein von Ablagerungen in den übrigen Membranmodulen, die zur Erzeugung eines Permeats verwendet werden.

Die mittels der polymeroptischen Faser erzeugen Messwerte (in Bezug auf eine Änderung optischer Kennwerte der Faser, wie z.B. deren Transmission) können für eine Zustandsauswertung des Membranmoduls und/oder für einen Eingriff in den im Membranmodul ablaufenden Membranprozess verwendet werden. Beispielsweise kann über die von der polymeroptischen Faser erzeugten Messwerte ermittelt werden, wann eine Verblockung der Membranschichten droht und zur Vermeidung eine Reinigung und Spülung des Membranmoduls erforderlich erscheint. Durch Änderung der Verfahrensparameter des Membrantrennprozesses kann auch die weitere Ausbildung von Ablagerungen minimiert werden. Bei der Aufkonzentrierung eines Feed-Stroms können insbesondere schwer lösliche Salze im Membranmodul ausfallen. Durch eine sukzessive Variation der Aufkonzentrierung, unter Einbeziehung der Messwerte der polymeroptischen Faser, kann einer definierten Aufkonzentrierung ein Auftreten bzw. Fernbleiben von Ausfällen zugeordnet werden. So kann der Membrantrennprozess beispielsweise auf eine maximal erzielbare Aufkonzentrierung eingestellt werden, bei der es zu keiner Ausfällung kommt.

Ein Eingriff in den Membrantrennprozess kann dabei insbesondere genutzt werden, um eine möglichst hohe Aufkonzentrierung bis zur Grenze der Entstehung von Ablagerungen zu betreiben und/oder zur Optimierung der Dosierung von Hilfsstoffen (wie beispielsweise Antiscalants oder Biozide). Weiterhin kann dadurch ein Reinigungsprozess optimiert werden, beispielsweise durch Beendigung des Reinigungsprozesses bei Erreichen eines vorgegebenen Messsignals, das anzeigt, dass alle Ablagerungen während der Reinigung zumindest weitgehend beseitigt worden sind.

Vorteilhaft ist es, in einer Membrananlage mit einer Mehrzahl von Membranmodulen nur eines oder einige wenige der Membranmodule gemäß der Erfindung mit einer polymeroptischen Faser zu versehen und dadurch als Messmodul auszugestalten, um Ablagerungen auf den Oberflächen der Membranschichten dieses Messmoduls zu erfassen. Dabei kann davon ausgegangen werden, dass im selben Umfang, wie sich in dem Messmodul Ablagerungen auf den Membranschichten gebildet haben, auch in den übrigen Membranmodulen Ablagerungen entstanden sind. Die Ausbildung eines Membranmoduls als Messmodul ermöglicht dabei auch einen einfacheren Austausch des Messmoduls, bspw. bei einem Defekt der darin eingegliederten Faser.

Die Erfassung der Ablagerungen erfolgt bevorzugt an einem Ort in dem Membranmodul, an dem eine lokal erhöhte Konzentration von in dem Membrantrennprozess aus dem Fluid abzutrennenden Inhaltsstoffen (beispielsweise Salze) vorliegt, im Vergleich zur Konzentration der Inhaltsstoffe (insbesondere der Salzkonzentration), die im Durchschnitt in dem Membranmodul vorliegt. Als bevorzugte Messorte können beispielsweise Stagnationszonen innerhalb des Membranmoduls ausgewählt werden, in denen das mit dem Feed-Strom dem Membranmodul zugeführte Fluid eine erhöhte Verweildauer aufweist und daher zu einer erhöhten Ausbildung von Ablagerungen führen kann.

Die bevorzugten Messorte innerhalb des Membranmoduls werden beispielsweise durch die Ausbildung von Aussparungen in dem Mantel der polymeroptischen Faser an den ausgewählten Messorten definiert.

Als bevorzugte Messorte für die Erfassung von Biofouling und kolloidalem Fouling haben sich beispielsweise Bereiche innerhalb des Membranmoduls bzw. einer gesamten Membrananlage herausgestellt, welche in Strömungsrichtung des Fluids am Beginn des wirksamen Bereichs des Membranmoduls sind, in dem der eigentliche Membrantrennprozess stattfindet. Zur Erfassung von mineralischen Ablagerungen (Scaling) haben sich dagegen Bereiche als bevorzugte Messorte herausgestellt, welche sich in Strömungsrichtung des aufgegebenen Feedstroms am Ende des wirksamen Bereichs des Membranmoduls bzw. einer gesamten Membrananlage befinden.

Das erfindungsgemäße Membranmodul enthält eine Mehrzahl von neben- oder übereinanderliegenden Lagen aus einer permeablen oder semipermeablen Membranschicht, wobei erfindungsgemäß wenigstens eine polymeroptische Faser in das Membranmodul eingebettet oder eingelegt ist, wobei die polymeroptische Faser in Kontakt mit wenigstens einer Lage der Membranschicht steht.

In zweckmäßigen Ausführungsbeispielen kann es sich bei dem Membranmodul um ein Flachmembranmodul oder um ein Wickelmodul, handeln, wobei zwischen benachbarten Lagen der Membranschicht jeweils eine Zwischenlage angeordnet ist und die oder jede polymeroptische Faser in eine Zwischenlage eingebettet oder eingelegt ist. Bei den Zwischenlagen kann es sich dabei insbesondere um Abstandshalter (spacer) handeln, die benachbarte Membranschichten bzw. benachbarte Lagen der Membranschicht im Abstand zueinander halten und den Stofftransport des Feeds bzw. Retentats und/oder des Permeats in dem Membranmodul ermöglichen. Die Zwischenschichten können bspw. durch Gewebe-, Geflecht- oder Gitterlagen aus einem Netzgitter gebildet sein, durch die das Fluid strömen kann. In derartige, als Abstandshalter wirkende Zwischenlagen kann eine polymeroptische Faser eingelegt oder eingebettet werden.

Die polymeroptischen Fasern können zweckmäßig so in die als Abstandshalter ausgebildete Zwischenlagen integriert sein, dass bestimmte Bereich innerhalb der Zwischenlagen von den Fasern erreicht werden. Zudem können die lokalen Aussparungen in dem den Faserkern umgebenden Mantel der Faser an jedem gewünschten Ort im Membranmodul platziert werden. So wird eine ortsaufgelöste Detektion von Ablagerungen innerhalb eines Membranmoduls ermöglicht.

Die oder jede in das erfindungsgemäße Membranmodul eingefügte Faser enthält bevorzugt einen Faserkern und einen diesen umgebenden Mantel, wobei der Mantel zumindest in einem Abschnitt eine Aussparung aufweist, so dass der Kern im Bereich der Aussparung offen liegt. Zweckmäßig liegt der Bereich mit der Aussparung dabei innerhalb des Membranmoduls, bspw. in einer Zwischenlage, sowie in Kontakt mit einer Membranschicht.

Es ist dabei auch möglich, dass der Abschnitt der Faser, der innerhalb einer Membranschicht liegt, ohne Mantel ausgebildet ist und nur der Faserbereich, der außerhalb der Membranschicht liegt, mit einem Mantel versehen ist. Dies verringert die Herstellungskosten. Die Bereiche der Faser mit einem Mantel, die außerhalb der Membranschichten liegen, können sich dabei innerhalb der Struktur eines Membranmoduls befinden, da das Modul mit Endkappen, Hülle etc. einen größeren Raum einnimmt als von den Membranen berührt.

Das erfindungsgemäße Membranmodul umfasst bevorzugt ein flüssigkeitsdichtes und insbesondere druckstabiles Gehäuses, bspw. in Form eines Druckrohrs aus glasfaserverstärktem Kunststoff, welches den im Membrantrennprozess benötigten Drücken standhält. Die Lagen der semipermeablen Membranschichten und die dazwischen liegenden Zwischenlagen sind dabei innerhalb des Gehäuses angeordnet und die polymeroptische Faser ist durch das Gehäuse geführt. Bspw. kann die polymeroptische Faser durch einen Eingang für den zugeführten Feedstrom des Fluids in das Gehäuse eingeführt und durch einen Ausgang für das Permeat herausgeführt werden.

Die oder jede polymeroptische Faser ist zweckmäßig mit einem Sender und einem strahlungsempfindlichen Empfänger gekoppelt, wobei der Sender und der Empfänger außerhalb des Gehäuses angeordnet sind. Der Sender koppelt eine elektromagnetische Strahlung (bspw. Licht) an einem Faserende in die Faser ein und der Empfänger erfasst am anderen Faserende die Intensität der durch den Faserkern geleiteten Strahlung. Durch Vergleich der Intensität der eingekoppelten Strahlung und der vom Empfänger gemessen Intensität der durch die Faser transmittierten Strahlung kann die Transmissivität der Faser und insbesondere deren Änderung während des laufenden Membrantrennprozesses gemessen werden.

Die von der polymeroptischen Faser gelieferten Messwerte geben einen Anhaltspunkt über die Menge von Ablagerungen, die sich auf der Oberfläche der polymeroptischen Faser und in entsprechender Weise auf den Oberflächen der Membranschicht gebildet haben, welche mit der polymeroptischen Faser in Kontakt steht. Die Messwerte liefern daher in Bezug auf die bereits erfolgte und im weiteren Membrantrennprozess noch zu erwartende Ausbildung von Ablagerungen. Daher lassen sich aufgrund der von der Faser gelieferten Messwerte Voraussagen über die weitere Bildung von Ablagerungen auf den Membranoberflächen erstellen und es wird durch Eingriffe in den Membrantrennprozess, bspw. durch Änderung der externen Parameter wie z.B. die Durchflussmenge und -geschwindigkeit des Feedstroms bzw. des äußeren Drucks oder der Temperatur im Membranmodul, ermöglicht, einem erhöhten Anwachsen von Ablagerungen und Biofouling vorzubeugen. Dadurch kann die Betriebs- und Lebensdauer des Membranmoduls verlängert und die Ausbeute erhöht werden. Weiterhin wird die Ressourceneffizienz des Membrantrennverfahrens verbessert, da der Einsatz von Reinigungs- und Spüllösungen minimiert oder sogar ganz auf eine Reinigung verzichtet werden kann. Der Erfolg von Reinigungsprozessen kann dabei nach einem Reinigungsschritt nicht nur durch die Erfassung der während des Betriebs entstandenen Ablagerungen, sondern auch über eine Detektion möglicherweise noch vorhandener Ablagerungen überprüft werden.

Diese und weitere Vorteile sowie Merkmale der Erfindung ergeben sich aus den nachfolgend unter Bezugnahme auf die begleitenden Zeichnungen näher beschriebenen Ausführungsbeispielen. Die Zeichnungen zeigen:
- **Figur** 1:: Schematische Darstellung einer Anordnung zur Detektion von Ablagerungen in einem ein Permeat produzierendes Membranmodul gemäß der Erfindung;
- **Figur 2:**: Schematische Schnittdarstellungen polymeroptischer Fasern, die in der Anordnung von Figur 1 zur Anwendung kommen, wobei in Figur 2a ein erstes Ausführungsbeispiel und in Figur 2b ein zweites Ausführungsbeispiel einer polymeroptischen Faser gezeigt ist;
- **Figur 3:**: Schematische Darstellung der Einbettung einer polymeroptischen Faser in ein Membranmodul mit einer Membranschicht und einer dazu benachbarten Zwischenlage, wobei Figur 3a ein erstes Ausführungsbeispiel und Figur 3b ein zweites Ausführungsbeispiel für eine Einbettung der polymeroptischen Faser in eine Zwischenlage des Membranmoduls zeigt;
- **Figur 4:**: Darstellung eines ersten Ausführungsbeispiels eines erfindungsgemäßen Membranmoduls, welches als Wickelmodul ausgebildet ist, wobei das Membranmodul zur besseren Darstellung teilweise aufgeschnitten gezeigt ist;
- **Figur 5:**: Detailansicht des als Wickelmodul ausgebildeten Membranmoduls von Figur 4 im Bereich des Eingangs;
- **Figur 6**:: Darstellung eines zweiten Ausführungsbeispiels eines erfindungsgemäßen Membranmoduls, welches als Hohlfasermodul ausgebildet ist, wobei das Hohlfasermodul zur besseren Darstellung teilweise aufgeschnitten gezeigt ist;
- **Figur 7**:: Darstellung eines dritten Ausführungsbeispiels eines erfindungsgemäßen Membranmoduls, welches als Wickelmodul ausgebildet ist, wobei das Membranmodul zur besseren Darstellung teilweise aufgeschnitten dargestellt und die Einfügung von polymeroptischen Fasern in das Membranmodul in verschiedenen Varianten gezeigt ist und der Einschub der Figur 7a eine vergrößerte Darstellung der Einfügung einer polymeroptischen Faser in das Membranmodul zeigt;
- **Figur 8:**: Schematische Darstellung einer Membrananlage mit einer Mehrzahl von Membranmodulen, worunter sich als Messmodule ausgebildete Membranmodule gemäß der Erfindung befinden.

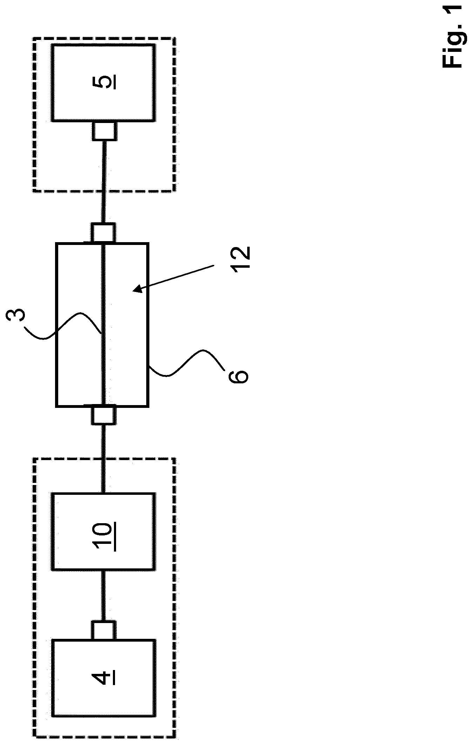

In Figur 1 ist schematisch eine Anordnung zur Erfassung von Ablagerungen in einem ein Permeat produzierendes Membranmodul dargestellt. Das Membranmodul ist dabei als Messmodul 12 ausgebildet und enthält mindestens eine permeable oder semipermeable Membranschicht (die in Figur 1 nicht gezeigt ist) sowie mindestens eine polymeroptische Faser 3, die so in das Membranmodul (Messmodul 12) eingegliedert ist, dass die polymeroptische Faser 3 in Kontakt mit mindestens einer Membranschicht steht. Die mindestens eine Membranschicht des Messmoduls 12 ist dabei in einem flüssigkeitsdichten Gehäuse 6 angeordnet. Bei dem Gehäuse 6 kann es sich insbesondere um ein Druckrohr handeln, welches - entsprechend der Auslegung des Membranmoduls - den hohen Drücken stand hält, die in herkömmlichen Membrantrennverfahren, wie z.B. der Mikrofiltration, der Ultrafiltration, der Nanofiltration oder der Umkehrosmose, eingesetzt werden.

Die in dem Messmodul 12 eingegliederte polymeroptische Faser 3 ist an einem Faserende mit einem Sender und am anderen Faserende mit einem Empfänger gekoppelt. Der Sender 4 kann bspw. als ein- oder mehrmodige Laser- oder Leuchtdiode (LED) ausgebildet sein, die elektromagnetische Strahlung, insbesondere Licht im sichtbaren Frequenzbereich, erzeugt. Bei Verwendung einer mehrmodige Laser- oder Leuchtdiode (LED) ist zur Einkopplung der vom Sender 4 erzeugten Moden zweckmäßig zwischen dem Sender 4 und dem Faserende der Faser 3, in welches die elektromagnetische Strahlung eingekoppelt wird, ein Modenmischer 10 und ein Fasereinkoppler angeordnet. Durch Verwendung eines Modenmischers 10 ist es möglich, auf kurzer Distanz eine möglichst definierte und reproduzierbare Verteilung der vom Sender 4 eingekoppelten Moden zu erzeugen. Der mit dem anderen Faserende gekoppelte Empfänger 5, bei dem es sich um einen strahlungsempfindlichen Detektor (wie z.B. eine Photodiode) handelt, erfasst die Intensität der durch die Faser 3 geleiteten Strahlung, ggf. mit spektraler Auflösung.

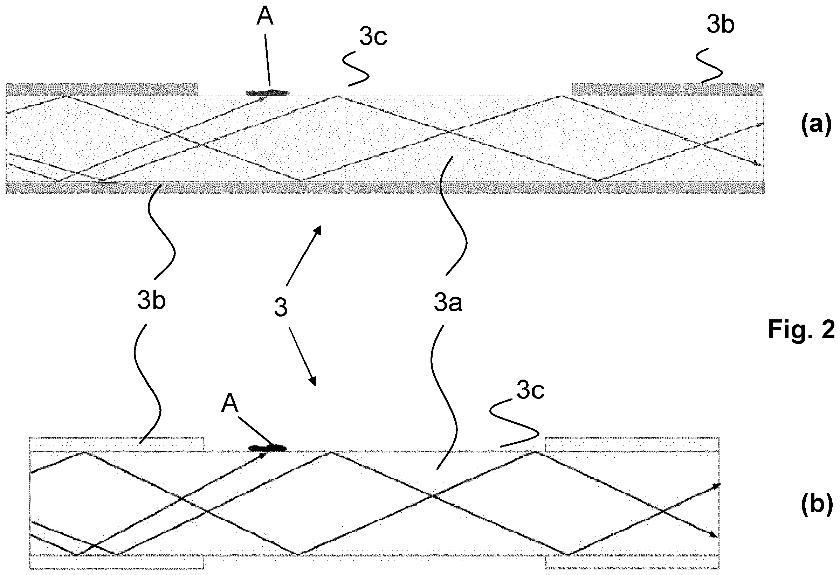

In Figur 2 sind zwei Ausführungsbeispiele einer polymeroptischen Faser 3 gezeigt, die in dem erfindungsgemäßen Membranmodul und dem erfindungsgemäßen Verfahren eingesetzt werden können. Die polymeroptische Faser 3 umfasst dabei in beiden Ausführungsbeispielen, die in Figur 2a und in Figur 2b gezeigt sind, jeweils einen Faserkern 3a und einen diesen umgebenden Mantel 3b, wobei der Faserkern 3a einen größeren Brechungsindex als der Mantel 3b aufweist. Der Faserkern 3a kann beispielsweise aus PMMA mit einem Brechungsindex von n = 1,49 gebildet sein und der Mantel 3b kann beispielsweise einen Brechungsindex von n = 1,42 aufweisen. Der Mantel 3b der Faser 3 weist in beiden Ausführungsbeispielen der Figur 2 jeweils bereichsweise eine Aussparung 3c auf.

In dem Ausführungsbeispiel von Figur 2a ist die Aussparung 3c nur punktuell, d.h. die von der Aussparung 3c eingenommene Fläche ist wesentlich kleiner als die Fläche des Mantels 3b. In dem Ausführungsbeispiel der Figur 2b ist die Aussparung 3c dagegen größer ausgebildet und sie erstreckt sich insbesondere in dem Aussparungsbereich 3c über den vollen Umfang des Mantels 3b. Im Bereich der Aussparung 3c liegt der Faserkern 3a frei und steht daher in direktem Kontakt mit der Umgebung, in der sich die Faser 3 befindet.

Wenn die Faser 3 gemäß der Erfindung in einem Membranmodul eingegliedert ist, kommt der Faserkern 3a daher mit der Flüssigkeit in Kontakt, die zur Erzeugung eines Permeats durch das Membranmodul (Messmodul 12 von Figur 1) geleitet wird. Soweit in dieser Flüssigkeit Substanzen, beispielsweise Carbonat-Ionen oder Mikroorganismen, enthalten sind, die zu Ablagerungen auf den Membranschichten des Membranmoduls führen können, kommen daher auch diese ablagerungsbildenden Substanzen direkt mit dem Faserkern 3a in Kontakt. Dadurch können sich auf der im Bereich der Ausnehmungen 3c der Faser frei liegenden Oberfläche des Faserkerns 3a Ablagerungen A niederschlagen. Bei den Ablagerungen A kann es sich insbesondere um mineralische Ablagerungen (beispielsweise Kalkablagerungen), um Ablagerungen organischer Moleküle oder um Bewuchs durch Mikroorganismen (Biofouling) handeln. Mit zunehmender Ausbildung von Ablagerungen A auf der frei liegenden Oberfläche des Faserkerns 3a ändern sich die optischen Kennwerte der Faser 3, insbesondere die Transmissivität. Wenn die Ablagerung A einen höheren Brechungsindex als der Kern der optischen Faser aufweist, tritt Licht aus der Faser, dies gilt z.B. für Kalk. Weist die Ablagerung A einen niedrigeren Brechungsindex als der Kern auf, so kann die Absorption des Lichts im evaneszenten Feld der Totalreflexion detektiert werden. Bei einer Totalreflexion tritt das reflektierte Licht als evaneszente Welle wenige µm in das umgebende Medium ein und - je nach optischer Eigenschaft des Foulings - werden bestimmte Wellenlängen im Fouling verstärkt absorbiert. Für Fouling, welches z.B. einen rötlichen Farbton annimmt, wird verstärkt grünes Licht im evaneszenten Feld absorbiert, wodurch die Transmissivität dieser Wellenlänge verringert wird. Die Foulingdetektion erfolgt in diesem Fall bspw. durch die Messung einer reduzierten Transmissivität bei einer spezifischen Wellenlänge. Aufgrund der spezifischen Absorption verschiedener Foulings kann dabei eine Unterscheidung diverser Ablagerungen erfolgen.

Die Änderung der optischen Kennwerte, insbesondere die Reduzierung der Transmissivität der Faser 3, können mit dem Empfänger 5 erfasst werden. Dabei stellt die vom Empfänger 5 erfasste Änderung des gemessenen optischen Kennwerts der Faser 3 ein Maß für die Menge der Ablagerungen A auf dem im Bereich der Aussparungen 3c freiliegenden Faserkern 3a dar.

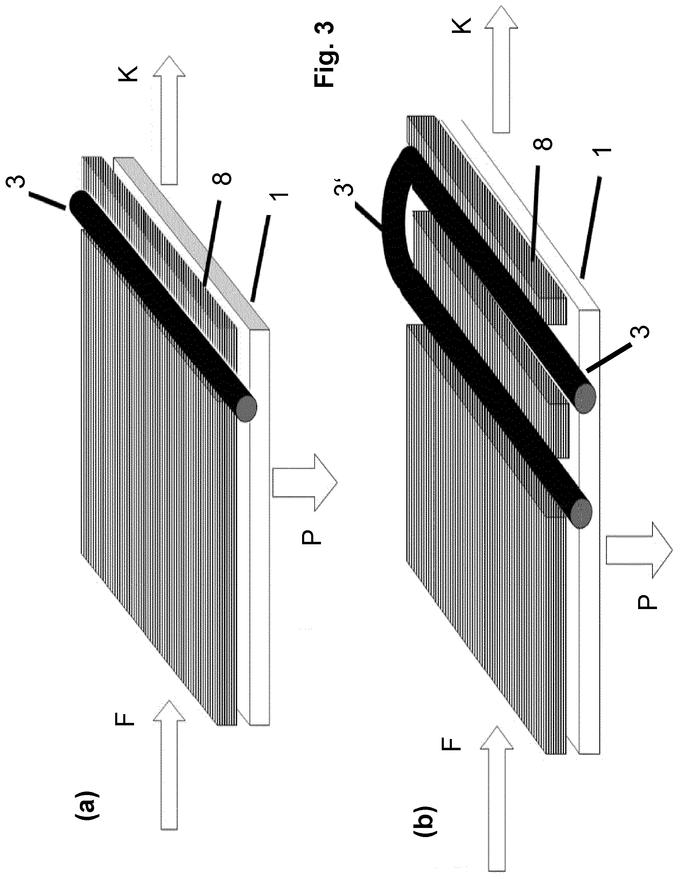

Aus den in Figur 3 gezeigten Ausführungsbeispielen ist eine mögliche Eingliederung einer polymeroptischen Faser 3 in ein Membranmodul (Messmodul 12) schematisch ersichtlich. In dem Membranmodul ist dabei (mindestens) eine permeable oder semipermeable Membranschicht 1 sowie eine Zwischenschicht 8 vorhanden. Bei der Zwischenschicht 8 kann es sich insbesondere um einen Abstandshalter (spacer) handeln, der übereinander angeordnete Lagen von Membranschichten 1 im Abstand zueinander hält und dabei einen Kanal ausbildet, durch den eine in dem Membranmodul zu behandelnde Flüssigkeit (beispielsweise Wasser) strömen kann.

Wie aus Figur 3a ersichtlich, ist die polymeroptische Faser 3 in der Zwischenschicht 2 eingebettet, wobei die Faser 3 langgestreckt und parallel zur Membranschicht 1 verläuft. Die Außenfläche der polymeroptischen Faser 3 steht dabei in Kontakt mit einer Oberfläche der Membranschicht 1.

In dem Ausführungsbeispiel von Figur 3b ist die polymeroptische Faser 3 in Form einer Schlaufe in die Zwischenschicht 2 eingebettet, wobei die Schlaufe einen gebogenen Bereich 3' enthält. Durch die Biegung der Faser 3 in dem Bereich 3' verändern sich ebenfalls die optischen Kennwerte der Faser 3, verglichen mit der Faser in den übrigen Bereichen, in denen die Faser gerade (langgestreckt) verlegt ist. In dem Ausführungsbeispiel von Figur 3b ist es nicht zwingend erforderlich eine Ausnehmung im Mantel 3b der Faser 3 vorzusehen, um dadurch den Faserkern 3a im Bereich der Ausnehmung freizulegen. Bei dem Ausführungsbeispiel von Figur 3b können sich Änderungen der optischen Kennwerte der Faser 3 bereits durch Ausbildung von Ablagerungen A in dem gebogenen Bereich 3' ergeben. Diese Änderungen der optischen Kennwerte können wiederum mit dem Empfänger 5 erfasst werden, so dass auf das Vorhandensein und die Menge von Ablagerungen A in dem gebogenen Bereich 3' der Faser 3 geschlossen werden kann.

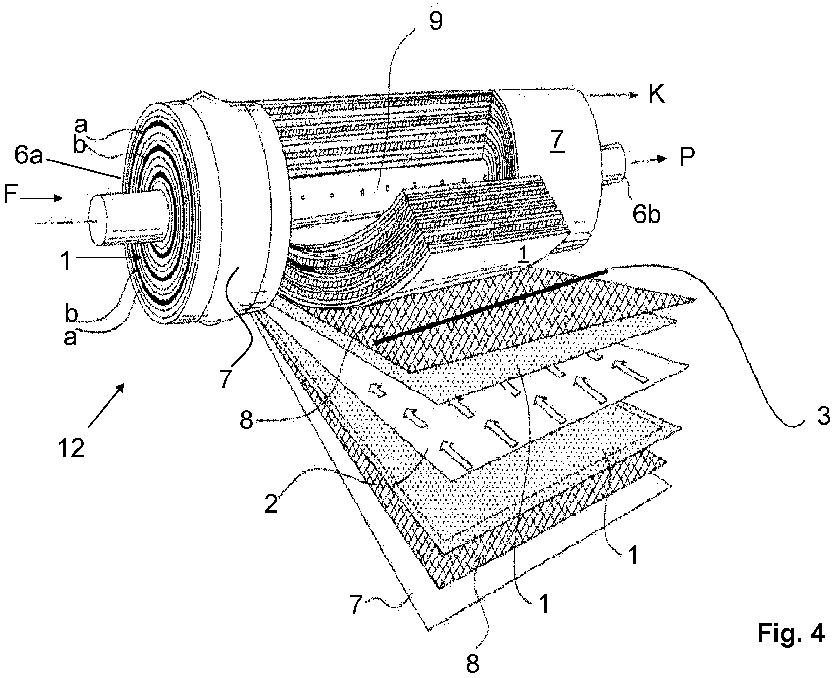

In Figur 4 ist ein erstes Ausführungsbeispiel eines erfindungsgemäßen Membranmoduls mit einer darin eingebundenen polymeroptischen Faser 3 gezeigt, wobei das Membranmodul als Messmodul 12 in Form eines Wickelmoduls ausgebildet ist.

Das in Figur 4 gezeigte Messmodul 12 umfasst eine Ummantelung 7, in dem eine permeable oder semipermeable Membranschicht 1 angeordnet ist. Die Membranschicht 1 ist dabei flächig ausgebildet und in einer mehrschichtigen Anordnung eingebunden. Die mehrschichtige Anordnung ist dabei auf ein zylindrisches Zentralrohr 9 aufgewickelt. Durch die Aufwicklung der Membranschicht 1 auf das zylindrische Zentralrohr 9 bilden sich in radialer Richtung gesehen übereinanderliegende Lagen a, b der Membranschicht 1. Das Messmodul 12 kann, ggf. mit weiteren Modulen, in einem flüssigkeitsdichten Gehäuse (hier nicht dargestellt) angeordnet sein.

Die Ausbildung der einzelnen Lagen a, b ist durch die aufgeschnittene Darstellung in Figur 4 ersichtlich. Jede Lage a, b der mehrschichtigen Anordnung umfasst dabei (von radial außen nach innen gesehen) eine als Feedspacer 8 ausgebildete Zwischenlage, eine erste Membranschicht 1 aus einem semipermeablen Material, eine als Permeatspacer 2 ausgebildete Zwischenschicht, eine weitere Membranschicht 1 aus einem semipermeablen Material sowie eine weitere, als Feedspacer 8 ausgebildete Zwischenschicht. In diese, als Feedspacer 8 ausgebildete Zwischenschicht ist die polymeroptische Faser 3 eingebettet und steht mit der benachbarten Membranschicht 1 in Kontakt, wie aus Figur 4 ersichtlich.

Das Messmodul 12 von Figur 4 weist einen Eingang 6a, durch den ein Feedstrom F einer zu behandelnden Flüssigkeit, beispielsweise eine wässrige Lösung, zugeführt wird. Der Feedstrom F strömt die Lagen a, b des Wickelmoduls tangential an. In den Membranschichten 1 des Membranmoduls erfolgt dabei eine Trennung des aufgegebenen Feedstroms F in ein Permeat P und ein Konzentrat K. Das Permeat P fließt durch die als Permeatspacer ausgebildeten Zwischenschichten 2 in Richtung des Zentralrohrs 9. In dem Zentralrohr 9 sind Öffnungen vorgesehen, durch die das Permeat in das Innere des Zentralrohrs 9 fließen kann. Dadurch sammelt sich das in dem Membranmodul erzeugte Permeat P im Innern des Zentralrohrs 9 und kann von dort zu einem Ausgang 6b strömen, wo das gebildete Permeat zur vorgesehenen Verwendung mittels einer hier nicht gezeigten Abfuhrleitung abgeführt wird. Das sich beim Membrantrennprozess bildende Konzentrat K strömt in axialer Richtung durch das Wickelmodul und an dessen stirnseitigem Ende als Konzentratstrom K heraus. Das aus dem Wickelmodul ausströmende Konzentrat K kann entweder für eine Verwendung gesammelt und abgeleitet oder über eine hier nicht gezeigte Ausgussleitung verworfen werden.

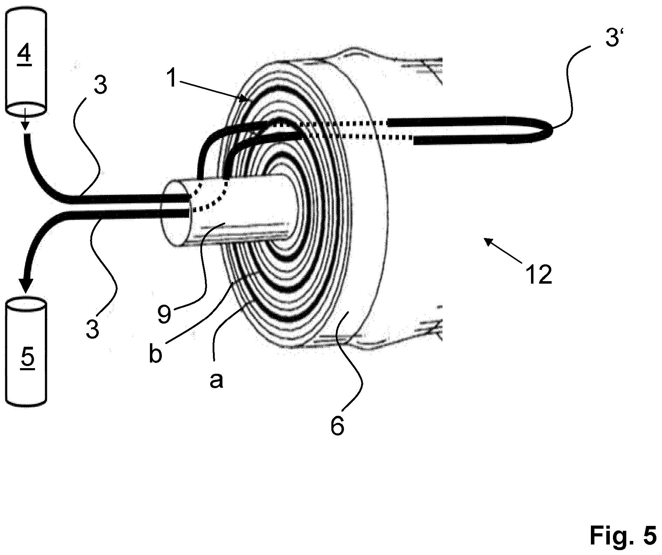

In Figur 5 ist der Bereich des Eingangs 6a des Membranmoduls 12 von Figur 4 im Detail gezeigt. Wie aus Figur 5 ersichtlich ist die polymeroptische Faser 3 durch das Zentralrohr 9 in das Innere des Membranmoduls 12 geführt und wird an der Umfangsfläche des Zentralrohrs 9 aus diesem herausgeführt und in eine oder mehrere Lagen a, b des Membranmoduls eingegliedert. In dem Ausführungsbeispiel von Figur 5 ist die polymeroptische Faser dabei am Ende des Membranmoduls 12, also im Bereich des Ausgangs 6b, als Schlaufe mit einem gebogenen Bereich 3' verlegt und wird so wieder zurück zum Bereich des Eingangs 6a geführt. Dort wird die Faser 3 am Außenumfang des Zentralrohrs 9 in das Innere des Zentralrohrs und von dort wieder aus dem Membranmodul 12 herausgeführt. Wie in Figur 5 schematisch dargestellt, ist dabei ein Faserende der Faser 3 mit einem Sender 4 und das andere Faserende mit einem Empfänger 5 gekoppelt. Dadurch können Änderungen in den optischen Kennwerten der Faser 3, die sich aufgrund der Ausbildung von Ablagerungen A auf der Oberfläche der Faser 3 ergeben, erfasst werden. Aus den erfassten Änderungen der gemessenen optischen Kennwerte der Faser 3 lässt sich auf das Vorhandensein und die Menge von Ablagerungen in dem Membranmodul 12 und insbesondere auf den Membranschichten 1 schließen.

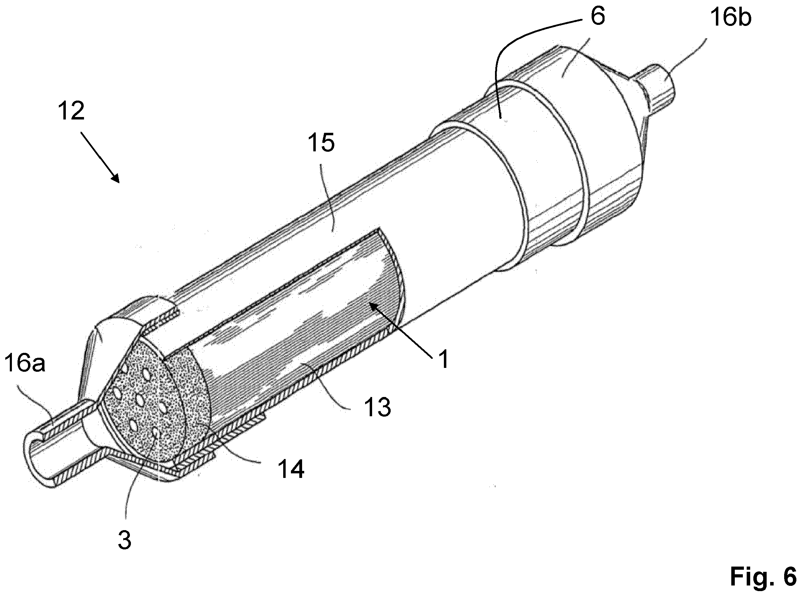

In Figur 6 ist ein weiteres Ausführungsbeispiel eines Membranmoduls gemäß der Erfindung mit darin eingegliederten polymeroptischen Fasern 3 gezeigt. Bei dem Membranmodul 12 von Figur 6 handelt es sich um ein Hohlfasermodul. Dieses umfasst ein äußeres, druckstabiles und flüssigkeitsdichtes Gehäuse 6 und ein darin angeordnetes, zylindrisches Bündel 13 von Hohlfasern, das von einer Einhausung 15 umgeben ist. Die Enden der Hohlfasern des Bündels 13 sind dabei jeweils an den Stirnseiten des zylindrischen Hohlfaserbündels 13 in einer Fixierung 14 fixiert. Bei der Fixierung 14 kann es sich beispielsweise um einen Verguss der Enden der Hohlfasern in einer Vergussmasse handeln. Jede Hohlfaser des Bündels 13 bildet dabei eine semipermeable Membranschicht 1 aus und führt daher bei Beaufschlagung des Hohlfasermoduls 12 mit einer zu behandelnden Flüssigkeit, bspw. einer wässrigen Lösung, zu einer Trennung des aufgegebenen Feedstroms der Flüssigkeit in ein Permeat P und ein Konzentrat K. Zur Einführung des Feedstroms der Flüssigkeit weist das Gehäuse 6 des Hohlfasermoduls an einem Ende einen Eingang 16a auf. Am anderen Ende des Hohlfasermoduls ist ein Ausgang 16b vorgesehen, durch den das erzeugte Permeat P abgeführt wird.

Wie aus Figur 6 ersichtlich sind in dem Bündel 13 der Hohlfasern mehrere polymeroptische Fasern 3 eingegliedert, wobei die polymeroptischen Fasern 3 parallel zu den Hohlfasern des Bündels 13 verlaufen und in Kontakt mit den Umfangsflächen der jeweils benachbarten Hohlfasern stehen. Damit steht jede der eingegliederten polymeroptischen Fasern 3 mit mehreren Hohlfasern des Bündels 13 gleichzeitig in Kontakt. Beispielsweise ist jede polymeroptische Faser an einem Faserende mit einem Sender 4 und am anderen Faserende mit einem Empfänger 5 gekoppelt, so dass die optischen Kennwerte der jeweiligen polymeroptischen Faser 3, insbesondere deren Transmissivität, detektiert werden können. Wie bei dem Wickelmodul von Figur 4 und 5 kann dadurch auch bei dem Hohlfasermodul von Figur 6 auf das Vorhandensein und die Menge von Ablagerungen auf den Außenflächen der Hohlfasern geschlossen werden, wenn eine Änderung der optischen Kennwerte der polymeroptischen Fasern 3 ermittelt wird. Durch die Verwendung mehrerer polymeroptischer Fasern 3 ist es dabei möglich, ortsselektiv (in radialer Richtung des Hohlfasermoduls) Ablagerungen zu erfassen und festzustellen, an welchen Stellen in dem Hohlfasermodul besonders starke Ablagerungen vorhanden sind.

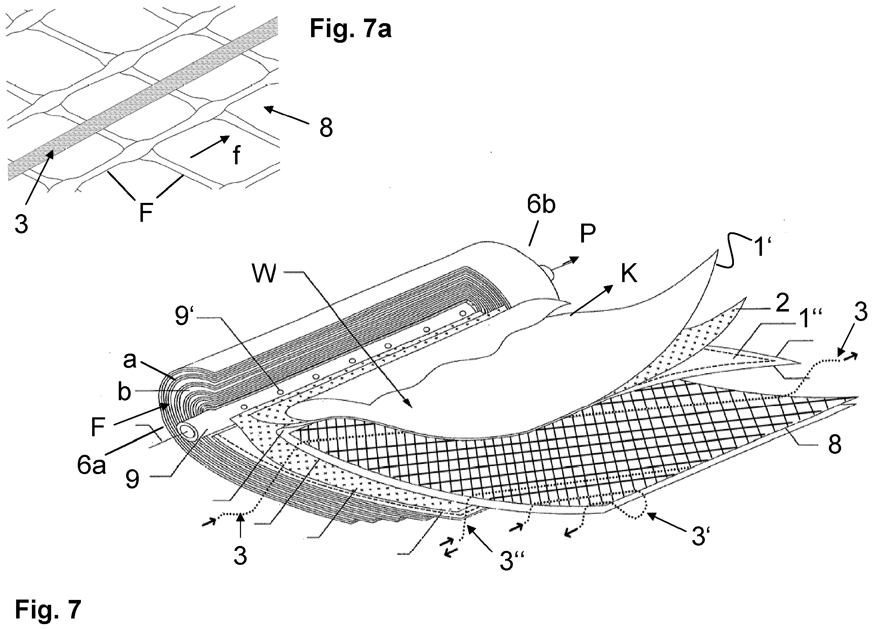

In Figur 7 ist ein drittes Ausführungsbeispiel eines erfindungsgemäßen Membranmoduls mit mehreren darin eingebundenen polymeroptischen Fasern 3, 3', 3" gezeigt, wobei das Membranmodul als Wickelmodul ausgebildet ist.

Das in Figur 7 gezeigte Membranmodul umfasst ein zylindrisches Zentralrohr 9 mit Öffnungen 9', das zur Abführung des Permeats dient. Um das Zentralrohr 9 ist wenigstens ein mehrlagiges Wickelelement W gewickelt (ggf. auch mehrere Wickelelemente), welches eine erste und eine zweite Membranschicht 1', 1" mit einer dazwischen angeordneten Zwischenschicht 2 (Permeatspacer) sowie eine Spacerschicht 8 (Feedspacer) umfasst. Das rechteckig ausgebildete Wickelelement W ist auf dem Zentralrohr 9 aufgewickelt. Durch die Aufwicklung des Wickelelements W auf das zylindrische Zentralrohr 9 bilden sich in radialer Richtung gesehen übereinanderliegende Lagen a, b des Wickelelements W, welche jeweils von einer Spacerschicht 8 begrenzt und dadurch voneinander beabstandet sind. Die Spacerschicht 8 dient dabei als Zuführungsschicht für einen Feedstrom F einer Flüssigkeit und steht hierfür mit den beiden stirnseitigen Enden des Membranmoduls in Verbindung, so dass der Feedstrom F an einem stirnseitigen Ende und axial entlang der Längsachse des Zentralrohrs zugeführt werden kann. Die Spacerschicht 8 kann dabei gitter- oder netzförmig, bspw. als Kunststoffnetz oder als Gitter-Vlies, ausgebildet sein und umfasst gekreuzt zueinander angeordnete Filamente F, die längs und quer zu einer Filamentrichtung f verlaufen und dadurch ein Gitternetz ausbilden, wie aus der vergrößerten Darstellung der Figur 7a ersichtlich. Parallel zu der Filamentrichtung f verlaufend ist dabei eine polymeroptische Faser 3 in die Spacerschicht 8 eingelegt, wie aus Figur 7a zu erkennen. Dabei kann die polymeroptische Faser 3 auf den Filamenten der Spacerschicht 8 aufliegen, mit diesen verbunden sein (bspw. durch Verkleben) oder auch in das von den Filamenten F aufgespannte Gitternetz der Spacerschicht 8 eingeflochten sein.

In Figur 7 sind mehrere Möglichkeiten gezeigt, wie eine polymeroptische Faser 3 in das Gitternetz der Spacerschicht 8 eingefügt werden kann. Eine erste polymeroptische Faser 3 verläuft dabei parallel zu einer Filamentrichtung f der Filamente F der Spacerschicht 8 und von einem strinseitigen Ende (Eingang 6a) zum gegenüberliegenden strinseitigen Ende (Ausgang 6b) des Membranmoduls. Durch die Aufwicklung des Wickelelements W um das Zenralrohr 9 verläuft die polymeroptische Faser 3 spiralförmig um das Zentralrohr 9. Eine zweite polymeroptische Faser 3' ist in dem Ausführungsbeispiel der Figur 7 so in die Spacerschicht 8 eingelegt, dass ein erstes Ende der polymeroptischen Faser 3' an einem ersten stirnseitigen Ende (Eingang 6a) in das Membranmodul eingeführt und die polymeroptische Faser 3' in der Ummantelung 7 schleifenförmig zurück in die Spacerschicht 8 geführt und das andere Ende der polymeroptische Faser 3' wieder aus dem ersten stirnseitigen Ende (Eingang 6a) aus dem Membranmodul herausgeführt wird. Eine dritte polymeroptische Faser 3" ist in dem Ausführungsbeispiel der Figur 7 so in die Spacerschicht 8 eingelegt, dass ein erstes Ende der polymeroptische Faser 3' an einem ersten stirnseitigen Ende (Eingang 6a) in das Membranmodul eingeführt und das zweite Ende der polymeroptischen Faser 3" offen und beispielsweise verspiegelt ausgebildet ist und im Inneren der Spacerschicht 8 endet. Das Signal wird dabei am verpiegelten Ende der polymeroptischen Faser 3" reflektiert und zurück zum ersten Ende der polymeroptische Faser 3" geleitet und dort zu einem Empfänger 5 ausgekoppelt. Die in Figur 7 gezeigten Fasern 3, 3', 3" können jeweils einzeln, in Mehrzahl oder in Kombination der verschiedenen Varianten zur Einlegung der Fasern in das Membranmodul eingebracht werden. Durch eine gezielte Integration einer oder mehrerer Fasern 3 in jede beliebige Spacerschicht 8 kann eine räumliche Auflösung der Ablagerungsverteilung realisiert werden. Diese ortsaufgelöste Ablagerungserfassung kann zusätzlich durch eine lokale, bereichsweise Entfernung des optischen Mantels 3b verfeinert werden. Da Scaling am Ende des wirksamen Membranbereichs und nahe des Zentralrohrs beginnt, kann eine frühzeitige und gezielte Detektion forciert werden. Analog dazu kann zur Detekion von Biofouling am Anfang des wirksamen Membranbereichs eine oder mehrere integrierte polymeroptische Fasern verwendet werden.

Wie beim Ausführungsbeispiel der Figur 4 umfasst auch das Membranmodul der Figur 7 ein hier nicht dargestelltes Gehäuse mit einem Eingang 6a, durch den ein Feedstrom F einer zu behandelnden Flüssigkeit zugeführt wird. Der Feedstrom F strömt die Lagen a, b des Wickelelements W tangential an. In den Membranschichten 1', 1" des Membranmoduls erfolgt dabei eine Trennung des aufgegebenen Feedstroms F in ein Permeat P und ein Konzentrat K. Das Permeat P fließt durch die Öffnungen 9' in das Zentralrohr 9 und von dort zu einem Ausgang 6b, wo das gebildete Permeat abgeführt wird. Das sich beim Membrantrennprozess bildende Konzentrat K strömt in axialer Richtung durch das Wickelelements W und an dessen stirnseitigem Ende (Ausgang 6b) als Konzentratstrom K heraus.

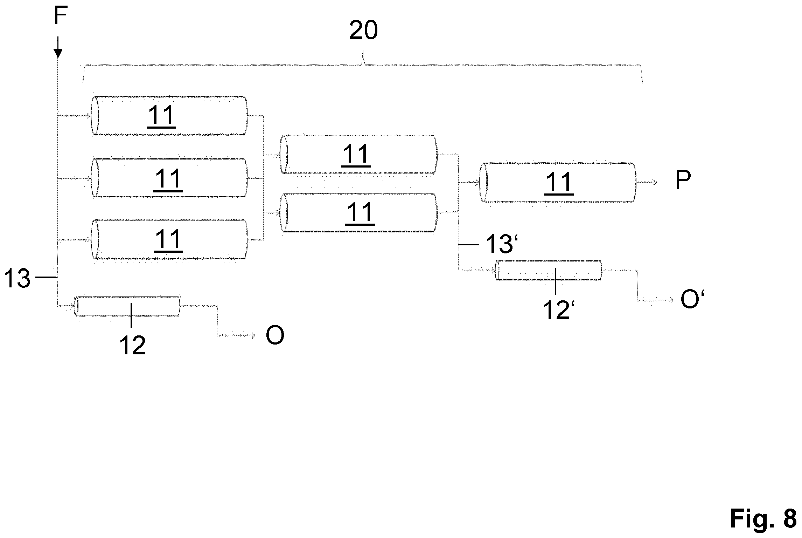

Die vorbeschriebenen Membranmodule, die jeweils wenigstens eine darin eingegliederte polymeroptische Faser 3 aufweisen, können in Membrananlagen mit einer Mehrzahl von Membranmodulen eingesetzt werden, um Ablagerungen in den Membranmodulen der Membrananlage zu detektieren. In Figur 8 ist schematisch ein Ausführungsbeispiel einer solchen Membrananlage 20 mit einer Mehrzahl von Membranmodulen 11 gezeigt. Jedes Membranmodul 11 dient dabei der Erzeugung eines Permeats aus einem aufgegebenen Feedstrom F einer Flüssigkeit, insbesondere einer wässrigen Lösung. Jedes Membranmodul 11 enthält dabei mindestens eine permeable oder semipermeable Membranschicht 1. Die einzelnen Membranmodule 11 können dabei beispielsweise als Wickelmodul oder als Hohlfasermodul ausgebildet sein. Die einzelnen Membranmodule 11 können - wie in dem Ausführungsbeispiel von Figur 8 gezeigt - sowohl in Parallel- als auch in Reihenschaltungen gekoppelt sein. Das Ausführungsbeispiel von Figur 8 zeigt eine Tannenbaumschaltung mit einer Serienanordnung von parallel geschalteten Membranmodulen 11. Der Feedstrom F wird dabei der Membrananlage 20 an einem Eingang zugeführt und das in der Membrananlage durch Membrantrennprozesse erzeugte Permeat P wird an einem Ausgang der Membrananlage 20 ausgeleitet.

Zur Erfassung von Ablagerungen in den Membranmodulen 11 der Membrananlage 20 umfasst diese, wie in Figur 8 gezeigt, zwei als Messmodule 12, 12' ausgebildete Membranmodule gemäß der Erfindung. Bei den als Messmodule 12, 12' ausgebildeten Membranmodulen kann es sich beispielsweise um ein Wickelmodul handeln, wie in den Figuren 4 und 7 gezeigt, oder um ein Hohlfasermodul, wie in Figur 6 gezeigt. Jedes Messmodul 12, 12' umfasst dabei mindestens eine permeable oder semipermeable Membranschicht 1 und wenigstens eine in das Messmodul eingegliederte polymeroptische Faser 3. Beispielsweise können in einer Membrananlage 20 ein Membranmodul 11 oder auch mehrere Membranmodule 11 durch Messmodule 12, 12' ersetzt werden. Alternativ können die Messmodule 12, 12' in Bypassleitungen 13, 13' integriert werden. Die Messmodule 12, 12' sind dabei in Bypass-Leitungen 13, 13' der Membrananlage 20 angeordnet. Die durch diese Bypass-Leitungen 13, 13' geleitete Flüssigkeit des Feedstroms F durchströmt die Messmodule 12, 12' dabei nur zum Zweck der Detektion von Ablagerungen. Der dabei durch den Membrantrennprozess in den Messmodulen 12 erzeugte Output O, O' wird dabei nicht dem Permeatstrom P zugeführt, sondern über die Bypass-Leitungen 13, 13' aus der Membrananlage 20 ausgeleitet und verworfen.

Eine Anordnung der Messmodule 12, 12', wie in dem Ausführungsbeispiel von Figur 8 gezeigt, ermöglicht eine gezielte Auswahl von Messorten in der Membrananlage 20, an denen die Ausbildung von Ablagerungen zu befürchten ist. Zur Erfassung von Biofouling können dabei bevorzugt Messorte im Bereich des Eingangs der Membrananlage 20 ausgewählt werden, in dem der Feedstrom F der Flüssigkeit aufgegeben wird. Zur Erfassung von mineralischen Ablagerungen (Scaling) haben sich dagegen Messorte im stromabwärtigen Bereich, also im Bereich des Ausgangs der Membrananlage 20, als vorteilhaft erwiesen.

## Patentansprüche

1. Membranmodul, welches mindestens eine permeable oder semipermeable Membranschicht (1) sowie eine Vorrichtung zur Detektion von Ablagerungen in dem Membranmodul enthält, wobei mindestens eine polymeroptische Faser (3) in das Membranmodul zur Erfassung von Ablagerungen auf der wenigstens einen Membranschicht (1) eingegliedert ist, **dadurch gekennzeichnet, dass** die polymeroptische Faser (3) in Kontakt mit der wenigstens einen Membranschicht (1) steht.

2. Membranmodul nach Anspruch 1, wobei das Membranmodul zur Erzeugung eines Permeats aus einem Feed-Strom (F) einer Flüssigkeit, insbesondere einer wässrigen Lösung, dient und das Membranmodul eine Mehrzahl von neben- oder übereinanderliegenden Lagen (a, b) aus einer permeablen oder semipermeablen Membranschicht (1) umfasst, und die wenigstens eine polymeroptische Faser (3) in Kontakt mit wenigstens einer Lage (a, b) der Membranschicht (1) steht.

3. Membranmodul nach Anspruch 1 oder 2, wobei zwischen benachbarten Lagen der Membranschicht (1) jeweils eine Zwischenlage (2, 8) angeordnet ist, wobei die oder jede polymeroptische Faser (3) in eine Zwischenlage (2, 8) eingebettet oder eingelegt ist.

4. Membranmodul nach Anspruch 3, wobei zwischen benachbarten Membranschichten (1) jeweils eine als Abstandshalter ausgebildete Zwischenlage (2, 8) angeordnet ist, welche die benachbarten Membranschichten (1) im Abstand zueinander hält, wobei die polymeroptische Faser (3) in eine als Abstandshalter ausgebildete Zwischenlage (2, 8) eingelegt ist.

5. Membranmodul nach einem der voranstehenden Ansprüche, wobei die oder jede polymeroptische Faser (3) einen Faserkem (3a) und einen diesen umgebenden Mantel (3b) mit einer Aussparung (3c) im Mantel (3b) aufweist, wobei die Aussparung (3c) zumindest in einem Abschnitt liegt, der in Kontakt mit der wenigstens einen Membranschicht (1) steht.

6. Membranmodul nach einem der voranstehenden Ansprüche, wobei die oder jede Membranschicht (1), insbesondere die Lagen (a, b) der semipermeablen Membranschichten (1) sowie die dazwischen liegenden Zwischenlagen (2, 8), innerhalb einer Ummantelung (7) angeordnet sind, wobei das Membranmodul in einem flüssigkeitsdichten und druckstabilen Gehäuses (6) angeordnet ist.

7. Membranmodul nach Anspruch 6, wobei die oder jede polymeroptische Faser (3) mit einem Sender (4) und einem Empfänger (5) gekoppelt ist, wobei der Sender (4) und der Empfänger (5) außerhalb des Gehäuses (6) angeordnet sind.

8. Membranmodul nach Anspruch 6 oder 7, wobei das Gehäuse (6) einen Eingang (16a) für die Flüssigkeit und einen Ausgang (16b) für das Permeat (P) aufweist, wobei die oder jede polymeroptische Faser (3) durch den Eingang (16a) in das Gehäuse (6) eingeführt und wieder herausgeführt oder durch den Eingang (16a) eingeführt und durch den Ausgang (16b) herausgeführt ist.

9. Membranmodul nach einem der voranstehenden Ansprüche, wobei das Membranmodul als Flachmembranmodul, als Wickelmodul, als Rohrmodul oder als Hohlfasermodul ausgebildet ist.

10. Verfahren zur Detektion von Ablagerungen in einem ein Permeat (P) produzierendes Membranmodul nach einem der voranstehenden Ansprüche, mittels Einsatz wenigstens einer polymeroptischen Faser (3), wobei
a) die mindestens eine polymeroptische Faser (3) in das Membranmodul zur in-situ Erfassung von Ablagerungen eingegliedert wird, und
b) die Erfassung der Ablagerungen während eines laufenden Membrantrennprozesses stattfindet, in welchem in dem Membranmodul das Permeat (P) produziert wird.

11. Verfahren gemäß Anspruch 10, wobei die polymeroptische Faser (3) Messwerte liefert, die einen Rückschluss auf das Vorhandensein und die Menge von Ablagerungen in dem Membranmodul ermöglichen und wobei die von der polymeroptischen Faser (3) erzeugten Messwerte für eine Zustandsauswertung und/oder für einen Eingriff in den im Membranmodul ablaufenden Membrantrennprozess verwendet werden.

12. Verfahren gemäß Anspruch 11, wobei der Membrantrennprozess in einer Membrananlage (20) mit mehreren Membranmodulen (11) durchgeführt wird, wobei in mindestens einem der Membranmodule eine polymeroptische Faser (3) eingegliedert ist, um dieses Membranmodul als Messmodul (12) auszugestalten, in dem mittels der polymeroptischen Faser (3) Ablagerungen in dem Messmodul (12) erfasst werden.

13. Verfahren gemäß einem der Ansprüche 10 bis 12, wobei das oder jedes Membranmodul mit einem Feed-Strom (F) einer Flüssigkeit, insbesondere einer wässrigen Lösung, beaufschlagt wird, wobei in dem jeweiligen Membranmodul aus dem Feed-Strom (F) der Flüssigkeit mittels eines Membrantrennprozesses ein Permeat (P) erzeugt wird.

14. Verfahren nach Anspruch 13, wobei zur Generierung einer Voraussage bezüglich einer Bildung von Ablagerungen, insbesondere von anorganischen Ablagerungen und/oder partikulär und/oder kolloidal und/oder mikrobiologisch bedingtem Fouling, in dem oder wenigstens einem Membranmodul während des laufenden Membrantrennprozesses zumindest eine Erfassung von Ablagerungen mittels der polymeroptischen Faser (3) an einem Messort in einem Membranmodul stattfindet, an welchem eine lokal erhöhte Konzentration von Inhaltsstoffen, beispielsweise anorganischen Salzen in der Flüssigkeit vorliegt, im Vergleich zur mittleren Konzentration der Inhaltsstoffe der im Membrantrennprozess behandelten Flüssigkeit.

15. Verfahren nach Anspruch 13, wobei es sich bei der Flüssigkeit um eine Lösung handelt, welche durch das Membranmodul in einer Strömungsrichtung durchgeleitet wird, wobei der Membrantrennprozess in einem wirksamen Bereich des Membranmoduls durchgeführt wird, um die Lösung in ein Permeat (P) und ein Konzentrat (K) aufzutrennen, wobei zur Generierung einer Voraussage bezüglich einer Bildung anorganischer Ablagerungen im Membranmodul während des laufenden Membrantrennprozess eine Erfassung von Ablagerungen mittels der polymeroptischen Faser (3) an einem Messort in dem Membranmodul stattfindet, der am Ende des wirksamen Bereichs des Membranmoduls ist.

## Claims

1. Membrane module containing at least one permeable or semi-permeable membrane layer (1) and a device for detecting deposits in the membrane module, wherein at least one polymer-optical fibre (3) is incorporated into the membrane module to record deposits on the at least one membrane layer (1), **characterised in that** the polymer-optical fibre (3) is in contact with the at least one membrane layer (1).

2. Membrane module according to claim 1, wherein the membrane module serves to generate a permeate from a feed stream (F) of a liquid, in particular an aqueous solution, and the membrane module comprises a plurality of sheets (a, b) of a permeable or semi-permeable membrane layer (1) lying next to one another or above one another, and the at least one polymer-optical fibre (3) is in contact with at least one sheet (a, b) of the membrane layer (1).

3. Membrane module according to claim 1 or 2, wherein respectively an intermediate sheet (2, 8) is arranged between adjacent sheets of the membrane layer (1), wherein the or each polymer-optical fibre (3) is embedded or inserted into an intermediate sheet (2, 8).

4. Membrane module according to claim 3, wherein respectively an intermediate sheet (2, 8) formed as a spacer, which holds the adjacent membrane layers (1) at a distance from one another, is arranged between adjacent membrane layers (1), wherein the polymer-optical fibre (3) is inserted into an intermediate sheet (2, 8) formed as a spacer.

5. Membrane module according to one of the preceding claims, wherein the or each polymer-optical fibre (3) has a fibre core (3a) and a shell (3b) surrounding the latter with a recess (3c) in the shell (3b), wherein the recess (3c) lies at least in a section which is in contact with the at least one membrane layer (1).

6. Membrane module according to one of the preceding claims, wherein the or each membrane layer (1), in particular the sheets (a, b) of the semi-permeable membrane layers (1) and the intermediate sheets (2, 8) lying in-between, are arranged within a casing (7), wherein the membrane module is arranged in a liquid-tight and pressure-stable housing (6).

7. Membrane module according to claim 6, wherein the or each polymer-optical fibre (3) is coupled to a transmitter (4) and a receiver (5), wherein the transmitter (4) and the receiver (5) are arranged outside of the housing (6).

8. Membrane module according to claim 6 or 7, wherein the housing (6) has an inlet (16a) for the liquid and an outlet (16b) for the permeate (P), wherein the or each polymer-optical fibre (3) is introduced into the housing (6) and removed again through the inlet (16a) or introduced through the inlet (16a) and removed through the outlet (16b).

9. Membrane module according to one of the preceding claims, wherein the membrane module is formed as a flat membrane module, as a spiral-wound module, as a tubular module or as a hollow fibre module.

10. Method for detecting deposits in a membrane module producing a permeate (P) according to one of the preceding claims, by using at least one polymer-optical fibre (3), wherein
a) the at least one polymer-optical fibre (3) is incorporated into the membrane module for in-situ recording of deposits, and
b) the recording of deposits takes place during a running membrane separation process in which the permeate (P) is produced in the membrane module.

11. Method according to claim 10, wherein the polymer-optical fibre (3) delivers measured values which facilitate a conclusion on the presence and the quantity of deposits in the membrane module and wherein the measured values generated by the polymer-optical fibre (3) are used to evaluate a state and/or to intervene in the membrane separation process proceeding in the membrane module.

12. Method according to claim 11, wherein the membrane separation process is carried out in a membrane system (20) with several membrane modules (11), wherein a polymer-optical fibre (3) is incorporated in at least one of the membrane modules in order to form this membrane module as a measuring module (12) in which deposits in the measuring module (12) are recorded by means of the polymer-optical fibre (3).

13. Method according to one of claims 10 to 12, wherein the or each membrane module is supplied with a feed stream (F) of a liquid, in particular an aqueous solution, wherein a permeate (P) is generated in the respective membrane module from the feed stream (F) of the liquid by means of a membrane separation process.

14. Method according to claim 13, wherein to generate a prediction with regard to formation of deposits, in particular of inorganic deposits and/or particulate and/or colloidal and/or microbiologically related fouling, in the or at least one membrane module during the running membrane separation process, at least recording of deposits by means of the polymer-optical fibre (3) takes place at a measuring site in a membrane module at which a locally increased concentration of components, for example inorganic salts in the liquid, is present compared to the average concentration of components of the liquid treated in the membrane separation process.

15. Method according to claim 13, wherein the liquid is a solution which is passed through the membrane module in one flow direction, wherein the membrane separation process is carried out in an active region of the membrane module in order to separate the solution into a permeate (P) and a concentrate (K), wherein to generate a prediction with regard to formation of inorganic deposits in the membrane module during the running membrane separation process, recording of deposits by means of the polymer-optical fibre (3) takes place at a measuring site in the membrane module which is at the end of the active region of the membrane module.

## Revendications

1. Module à membrane, lequel contient au moins une couche de membrane (1) perméable ou semi-perméable ainsi qu'un dispositif de détection de dépôts dans le module à membrane, dans lequel
au moins une fibre optique polymère (3) est incorporée dans le module à membrane pour détecter des dépôts sur l'au moins une couche de membrane (1), **caractérisé en ce que** la fibre optique polymère (3) est en contact avec l'au moins une couche de membrane (1).

2. Module à membrane selon la revendication 1, dans lequel le module à membrane sert à produire un perméat à partir d'un flux d'alimentation (F) d'un liquide, en particulier d'une solution aqueuse, et le module à membrane comprend une multitude de strates (a, b) juxtaposées ou superposées composées d'une couche de membrane (1) perméable ou semi-perméable, et l'au moins une fibre optique polymère (3) est en contact avec au moins une strate (a, b) de la couche de membrane (1).

3. Module à membrane selon la revendication 1 ou 2, dans lequel respectivement une strate intermédiaire (2, 8) est disposée entre des strates adjacentes de la couche de membrane (1), dans lequel la ou chaque fibre optique polymère (3) est intégrée ou insérée dans une strate intermédiaire (2, 8).

4. Module à membrane selon la revendication 3, dans lequel est disposée entre des couches de membrane (1) adjacentes respectivement une strate intermédiaire (2, 8) réalisée en tant qu'écarteur, laquelle maintient les couches de membrane (1) adjacentes à distance les unes par rapport aux autres, dans lequel la fibre optique polymère (3) est insérée dans une strate intermédiaire (2, 8) réalisée en tant qu'écarteur.

5. Module à membrane selon l'une quelconque des revendications précédentes, dans lequel la ou chaque fibre optique polymère (3) présente un noyau de fibre (3a) et une enveloppe (3b) entourant celui-ci avec un évidement (3c) dans l'enveloppe (3b), dans lequel l'évidement (3c) se situe au moins dans un tronçon qui est en contact avec l'au moins une couche de membrane (1) .

6. Module à membrane selon l'une quelconque des revendications précédentes, dans lequel la ou chaque couche de membrane (1), en particulier les strates (a, b) des couches de membrane (1) semi-perméables ainsi que les strates intermédiaires (2, 8) intercalées sont disposées à l'intérieur d'une gaine (7), dans lequel le module à membrane est disposé dans un boîtier (6) étanche aux liquides et stable à la pression.

7. Module à membrane selon la revendication 6, dans lequel la ou chaque fibre optique polymère (3) est couplée à un émetteur (4) et à un récepteur (5), dans lequel l'émetteur (4) et le récepteur (5) sont disposés à l'extérieur du boîtier (6).

8. Module à membrane selon la revendication 6 ou 7, dans lequel le boîtier (6) présente une entrée (16a) pour le liquide et une sortie (16b) pour le perméat (P), dans lequel la ou chaque fibre optique polymère (3) est introduite par l'entrée (16a) dans le boîtier (6) puis est guidée vers l'extérieur à nouveau ou est introduite par l'entrée (16a) et est guidée vers l'extérieur par la sortie (16b).

9. Module à membrane selon l'une quelconque des revendications précédentes, dans lequel le module à membrane est réalisé en tant que module à membrane plat, en tant que module enroulé, en tant que module tubulaire ou en tant que module à fibre creuse.

10. Procédé pour détecter des dépôts dans un module à membrane produisant un perméat (P) selon l'une quelconque des revendications précédentes au moyen de l'emploi d'au moins une fibre optique polymère (3), dans lequel
a) l'au moins une fibre optique polymère (3) est incorporée dans le module à membrane pour détecter in situ des dépôts, et
b) la détection des dépôts a lieu au cours d'un processus de séparation de membrane en cours, dans lequel le perméat (P) est produit dans le module à membrane.

11. Procédé selon la revendication 10, dans lequel la fibre optique polymère (3) fournit des valeurs de mesure, qui permettent une conclusion sur la présence et la quantité de dépôts dans le module à membrane et dans lequel les valeurs de mesure produites par la fibre optique polymère (3) sont utilisées pour une évaluation d'état et/ou pour une intervention dans le processus de séparation de membrane se déroulant dans le module à membrane.

12. Procédé selon la revendication 11, dans lequel le processus de séparation de membrane est mis en œuvre dans une installation à membrane (20) avec plusieurs modules à membrane (11), dans lequel une fibre optique polymère (3) est incorporée dans au moins un des modules à membrane pour configurer ledit module à membrane en tant que module de mesure (12), dans lequel des dépôts sont détectés dans le module de mesure (12) au moyen de la fibre optique polymère (3).

13. Procédé selon l'une quelconque des revendications 10 à 12, dans lequel le ou chaque module à membrane est soumis à l'action d'un flux d'alimentation (F) d'un liquide, en particulier d'une solution aqueuse, dans lequel un perméat (P) est produit dans le module à membrane respectif à partir du flux d'alimentation (F) du liquide au moyen d'un processus de séparation de membrane.

14. Procédé selon la revendication 13, dans lequel a lieu, pour générer une prévision en matière d'une formation de dépôts, en particulier de dépôts inorganiques et/ou de fouling lié sur le plan particulaire et/ou colloïdal et/ou microbiologique, dans le ou au moins un module à membrane au cours du processus de séparation de membrane en cours, au moins une détection de dépôts au moyen de la fibre optique polymère (3) sur un emplacement de mesure dans un module à membrane, sur lequel est présente une concentration élevée localement de composants, par exemple de sels inorganiques dans le liquide, en comparaison avec une concentration moyenne des composants du liquide traité dans le processus de séparation de membrane.

15. Procédé selon la revendication 13, dans lequel le liquide est une solution, laquelle est acheminée à travers le module à membrane dans une direction d'écoulement, dans lequel le processus de séparation de membrane est mis en œuvre dans une zone active du module à membrane pour séparer la solution en un perméat (P) et en un concentrat (K), dans lequel a lieu pour générer une prévision en matière d'une formation de dépôts inorganiques dans le module à membrane au cours du processus de séparation de membrane en cours, une détection de dépôts au moyen de la fibre optique polymère (3) sur un emplacement de mesure dans le module à membrane, qui est sur la fin de la zone active du module à membrane.
